(19) Europäisches Patentamt
European Patent Office
Office européen des brevets

(11) EP 4 684 639 A1

(12) # EUROPEAN PATENT APPLICATION
published in accordance with Art. 153(4) EPC

(43) Date of publication:
**28.01.2026 Bulletin 2026/05**

(21) Application number: **23928575.2**

(22) Date of filing: **20.03.2023**

(51) International Patent Classification (IPC):
***A01N 31/02** (2006.01)* ***A01P 3/00** (2006.01)*

(52) Cooperative Patent Classification (CPC):
**A01N 31/02; A01P 3/00**

(86) International application number:
**PCT/JP2023/010922**

(87) International publication number:
**WO 2024/194992 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Mandom Corporation**
**Osaka-shi, Osaka 540-8530 (JP)**

(72) Inventors:
- **MEKATA, Hideaki**
  **Osaka-shi, Osaka 540-8530 (JP)**
- **CHATANI, Yoshimitsu**
  **Osaka-shi, Osaka 540-8530 (JP)**
- **KITA, Mitsuyo**
  **Osaka-shi, Osaka 540-8530 (JP)**

(74) Representative: **TBK**
**Bavariaring 4-6**
**80336 München (DE)**

(54) **PRESERVATIVE COMPOSITION**

(57) It is an object of the present invention to provide a composition that is excellent in preservative property and safety. Provided is a preservative composition comprising the following component A and the following component B:

Component A: 1,2-decanediol
Component B: At least one or more selected from the group consisting of 1,2-alkanediol having 7 to 9 carbon atoms, sodium polyphosphate, and ethylhexylglycerin.

EP 4 684 639 A1

## Description

### TECHNICAL FIELD

The present invention relates to a preservative composition and a composition containing the preservative composition.

### BACKGROUND ART

Preservative components are compounded in external preparations such as cosmetics and medicines, as well as in foods, etc., in order to prevent rotting caused by microorganisms.

Fungi such as molds and yeasts have more complex structures than bacteria that are prokaryotes, and tend to exhibit higher resistance to preservatives and preservative components. A composition in which parahydroxybenzoic acid ester (paraben) is used in combination with phenoxyethanol is known as a component that also exhibits a preservative property against fungi, but such a composition is highly irritating to the skin and poses a safety problem.

Therefore, an attempt has been made to reduce a content of preservatives. For example, Patent Document 1 shows that an amount of conventional preservatives used can be reduced by using 1,2-alkanediol having 4 to 10 carbon atoms as a solubilizing agent.

### PRIOR ART DOCUMENT

#### Patent Document

Patent Document 1: JP H11-322591 A

### SUMMARY OF THE INVENTION

#### PROBLEMS TO BE SOLVED BY THE INVENTION

It is an object of the present invention to provide a composition that is excellent in preservative property and safety.

#### MEANS TO SOLVE THE PROBLEM

As a result of intensive studies, the present inventors have found that a combined use of 1,2-decanediol and a specific compound synergistically increases an preservative effect against fungi, resulting in a composition that is excellent in preservative property and safety, and completed the present invention.

That is, the present invention relates to:

[1] A preservative composition comprising the following component A and the following component B:

Component A: 1,2-decanediol
Component B: At least one or more selected from the group consisting of 1,2-alkanediol having 7 to 9 carbon atoms, sodium polyphosphate, and ethylhexylglycerin.

[2] The preservative composition of [1] above, wherein the component B is 1,2-heptanediol.
[3] The preservative composition of [1] or [2] above, further comprising the following component C:
Component C: nonionic surfactant.
[4] A composition comprising the following component A, the following component B, and a base,

wherein a content of the component A is 0.005 to 0.5% by mass and a content of the component B is 0.025 to 5.0% by mass:
Component A: 1,2-decanediol
Component B: one or more selected from the group consisting of 1,2-alkanediol having 7 to 9 carbon atoms, sodium polyphosphate, and ethylhexylglycerin.

[5] The composition of [4] above, wherein the component B is 1,2-heptanediol.
[6] The composition of [4] or [5] above, further comprising the following component C:

Component C: nonionic surfactant.

EFFECTS OF THE INVENTION

The composition of the present invention is excellent in preservative property and safety.

EMBODIMENT FOR CARRYING OUT THE INVENTION

A preservative composition and a composition containing the preservative composition relating to the present embodiment (hereinafter, sometimes simply referred to as the preservative composition or the composition) comprise at least one or more selected from the group consisting of 1,2-decanediol, and 1,2-alkanediol having 7 to 9 carbon atoms, sodium polyphosphate, and ethylhexylglycerin. Moreover, as an optional component, a nonionic surfactant or the like may be compounded.

In the preservative composition and the composition relating to the present embodiment, by using at least one or more selected from the group consisting of 1,2-decanediol, and 1,2-alkanediol having 7 to 9 carbon atoms, sodium polyphosphate, and ethylhexylglycerin in combination, the preservative effects against bacteria and fungi are synergistically improved compared with a case where 1,2-decanediol is used alone, and a composition that is excellent in preservative property and safety can be obtained.

**In** the present specification, "bacteria" are unicellular microorganisms that are larger than viruses. Examples of bacteria include, for example, spore-forming bacteria such as Clostridium botulinum, Clostridium perfringens, Bacillus cereus, Bacillus subtilis, Clostridium tetani, Bacillus anthracis, and the like, Staphylococcus aureus, Escherichia coli, Salmonella, Legionella, Pseudomonas aeruginosa, Vibrio cholerae, Mycobacterium tuberculosis, Streptococcus, Vibrio parahaemolyticus, and the like.

**In** the present specification, "fungi" is a general term for those excluding bacteria and slime molds (Myxomycetes) and include molds, yeasts, and the like.

Each of contents of the above-described components contained in the preservative composition and the composition relating to the present embodiment can be appropriately selected from the ranges described above so that a total content in the composition becomes 100% by mass or less. Besides, in the present specification, a numerical range identified with "to" means to include the numerical values of both ends.

Besides, in the present specification, the above-described 1,2-decanediol may be referred to as a "component A", one or more selected from the group consisting of the above-described 1,2-alkanediol having 7 to 9 carbon atoms, sodium polyphosphate, and ethylhexylglycerin may be referred to as "components B", and the nonionic surfactant may be referred to as a "component C".

[Preservative composition]

The preservative composition relating to the first embodiment of the present invention comprises 1,2-decanediol and at least one or more selected from the group consisting of 1,2-alkanediol having 7 to 9 carbon atoms, sodium polyphosphate, and ethylhexylglycerin. Moreover, as an optional component, a nonionic surfactant or the like may be compounded. The preservative composition relating to this embodiment is excellent in preservative property and safety and can be added as appropriate to items required to be imparted with a preservative property, such as cosmetics, medicines, quasi-drugs, foods, and the like.

<Component A: 1,2-decanediol>

1,2-decanediol can be widely compounded in cosmetics and the like as a moisturizing agent or a texture adjusting agent, and it can also be considered for use as emulsifying aid and agent and has an extremely high safety. As 1,2-decanediol, commercially available products can be used. Moreover, those produced by a known producing method may also be used.

<Component B: one or more selected from the group consisting of 1,2-alkanediol having 7 to 9 carbon atoms, sodium polyphosphate, and ethylhexylglycerin>

Examples of 1,2-alkanediol having 7 to 9 carbon atoms include 1,2-heptanediol, 1,2-octanediol, and 1,2-nonanediol. Among them, 1,2-heptanediol and/or 1,2-octanediol is preferable, and 1,2-heptanediol is more preferable. Besides, 1,2-alkanediol having 7 to 9 carbon atoms is known as a substance having a high safety and a stable antibacterial property.

Sodium polyphosphate is not particularly limited as long as it is a component that has a high safety and is

compounded in external preparations, foods, and the like, examples of which include, for example, sodium pyrophosphate, sodium tripolyphosphate, sodium tetrapolyphosphate, sodium pentapolyphosphate, sodium hexametaphosphate, and the like.

Ethylhexylglycerin is a compound represented by the following formula. In addition, ethylhexylglycerin is a commonly used moisturizing ingredient whose safety has been confirmed.

[Formula 1]

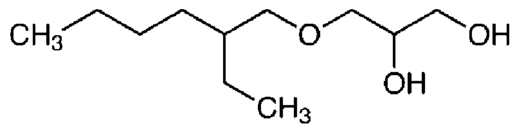

As the component B, commercially available products can be used. Moreover, those produced by a known producing method may also be used.

A total content of the components A and B in the preservative composition is not particularly limited, but can be, for example, 10% by mass or more, 20% by mass or more, 30% by mass or more, 40% by mass or more, 50% by mass or more, 60% by mass or more, 70% by mass or more, 80% by mass or more, or the like. Moreover, the preservative composition may consist of the components A and B, with the total content of the components A and B in the preservative composition being 100% by mass.

A ratio (A/B) of a content of the component A to a content of the component B in the preservative composition is preferably 0.001 or more, more preferably 0.01 or more, further preferably 0.05 or more, particularly preferably 0.10 or more. Moreover, A/B is preferably 20 or less, more preferably 10 or less, further preferably 5.0 or less, further preferably 1.0 or less, particularly preferably 0.90 or less, most preferably 0.75 or less.

<Component C: Nonionic surfactant>

The preservative composition of this embodiment may contain a nonionic surfactant from the viewpoint of solubilizing the component A. The nonionic surfactant may be used alone, or two or more thereof may be used in combination. As the component C, commercially available products can be used. Moreover, those produced by a known producing method may also be used.

Examples of the nonionic surfactant include sorbitan isostearate, a polyoxyalkylene hydrogenated castor oil, a polyoxyalkylene castor oil, a glycerin fatty acid ester, a glycol fatty acid ester, a sorbitan fatty acid ester, a polyoxyalkylene sorbitan fatty acid ester, a silicone surfactant, a glycerin fatty acid ester, a polyoxyalkylene alkyl ether, a polyoxyalkylene fatty acid ester, polyoxyalkylene alkylphenol, a polyoxyethylene sorbit fatty acid ester, a polyoxyethylene cetyl ether, a polyoxyethylene alkylphenyl formaldehyde condensate, polyoxyethylene sterol and a derivative thereof, polyoxyethylene lanolin and a derivative thereof, a polyoxyethylene beeswax derivative, a sugar ester, and the like. Among them, it preferably includes one or more selected from the group consisting of a polyoxyalkylene hydrogenated castor oil, a polyoxyethylene polyoxypropylene decyl tetradecyl ether, and a polyoxyethylene cetyl ether, and it more preferably includes a polyoxyalkylene hydrogenated castor oil. As the component C, commercially available products can be used. Moreover, those produced by a known producing method may also be used.

An average number of moles of ethylene oxide added to the polyoxyalkylene hydrogenated castor oil is preferably 30 to 110, more preferably 40 to 80, further preferably 50 to 60.

The polyoxyethylene polyoxypropylene decyl tetradecyl ether is a polyoxyethylene polyoxypropylene decyl tetradecyl ether obtained by etherbonding ethylene oxide and propylene oxide to a 2-decyltetradecyl alcohol. An average number of moles of ethylene oxide added which is ether-bonded is preferably 10 to 30, more preferably 20 to 30. An average number of moles of propylene oxide added which is ether-bonded is preferably 6 to 20, more preferably 6 to 10, further preferably 6 to 8.

An average number of moles of ethylene oxide added to the polyoxyethylene cetyl ether is preferably 5 to 30, more preferably 10 to 25, further preferably 15 to 25.

A content of the component C when compounded in the preservative composition of this embodiment is preferably 0.01% by mass or more, more preferably 0.05% by mass or more, further preferably 0.10% by mass or more, from the viewpoint of solubilizing the component A. Moreover, the content of the component C in the preservative composition is preferably 80% by mass or less, more preferably 70% by mass or less, further preferably 60% by mass or less, from the viewpoint of safety.

A content of the component C when compounded in the preservative composition of this embodiment based on 100 parts by mass of the total content of the components A and B is preferably 1000 parts by mass or less, more preferably

500 parts by mass or less, further preferably 150 parts by mass or less, further preferably 120 parts by mass or less, further preferably 100 parts by mass or less, particularly preferably 50 parts by mass or less.

The preservative composition of this embodiment may contain components other than the component A, the component B, and the component C. Examples of other components include a base mentioned below, other components, and the like. Moreover, the preservative composition may contain preservative components other than the component A and the component B.

Examples of preservative components other than the component A and the component B include paraben, phenoxyethanol, polylysine, a wintergreen leaf extract, a mono-fatty acid ester such as polyglyceryl-3 caprylate and the like, a grapefruit leaf extract, benzoate, 1,2-alkanediol having 3 to 6 carbon atoms, and the like.

A content of other preservative components other than component A and component B when compounded in the preservative composition of this embodiment based on 100 parts by mass of the total content of the components A and B is preferably less than 20 parts by mass, more preferably 10 parts by mass or less, further preferably 5 parts by mass or less, further preferably 3 parts by mass or less, further preferably 0.5 parts by mass or less, particularly preferably 0.1 parts by mass or less. Above all, it is most preferable that the preservative composition does not contain any preservative components other than the components A and B.

[Composition comprising preservative composition]

A composition relating to the second embodiment of the present invention contains a component A, a component B and a base as essential components. Moreover, it may contain a component C and the like as optional components.

A content of the component A in the composition is 0.005% by mass or more, preferably 0.010% by mass or more, more preferably 0.030% by mass or more, from the viewpoint of a preservative effect. Moreover, the content of the component A in the composition is 0.50% by mass or less, preferably 0.30% by mass or less, more preferably 0.20% by mass or less, from the viewpoints of formulation and stability of the composition.

A content of the component B in the composition is 0.025% by mass or more, preferably 0.050% by mass or more, more preferably 0.10% by mass or more, from the viewpoints of a preservative effect and solubilization of the component A. Moreover, the content of the component B in the composition is 5.0% by mass or less, preferably 2.0% by mass or less, more preferably 1.0% by mass or less, from the viewpoints of formulation and stability of the composition.

A ratio (A/B) of a content of the component A to a content of the component B in the composition is preferably 0.001 or more, more preferably 0.01 or more, further preferably 0.05 or more, particularly preferably 0.10 or more. Moreover, A/B is preferably 20 or less, more preferably 10 or less, further preferably 5.0 or less, further preferably 1.0 or less, particularly preferably 0.90 or less, most preferably 0.75 or less.

The composition of this embodiment preferably contains a component C from the viewpoint of solubilizing the component A. A content of the component C in the composition is preferably 0.01% by mass or more, more preferably 0.05% by mass or more, further preferably 0.10% by mass or more, from the viewpoint of solubilizing the component A. Moreover, the content of the component C in the composition is preferably 10.0% by mass or less, more preferably 5.0% by mass or less, further preferably 2.0% by mass or less, from the viewpoint of safety.

A content of the component C when compounded in the composition of this embodiment based on 100 parts by mass of the total content of the components A and B is preferably 1000 parts by mass or less, more preferably 500 parts by mass or less, further preferably 150 parts by mass or less, further preferably 120 parts by mass or less, further preferably 100 parts by mass or less, particularly preferably 50 parts by mass or less.

The composition of this embodiment may contain components other than the component A, the component B, the base, and the component C. Examples of other components include other components mentioned below, preservative components other than the component A and the component B, and the like.

A content of other preservative components other than component A and component B when compounded in the composition of this embodiment based on 100 parts by mass of the total content of the components A and B is preferably 20 parts by mass or less, more preferably 10 parts by mass or less, further preferably 5 parts by mass or less, further preferably 3 parts by mass or less, further preferably 0.5 parts by mass or less, particularly preferably 0.1 parts by mass or less. Above all, it is most preferable that the preservative composition does not contain any preservative components other than the components A and B.

<Base>

Examples of the base include water, an organic solvent, a powder, an excipient, and the like. As water, a purified water is preferably used. As the organic solvent, known ones can be used, examples of which include, for example, ethanol, polyphenyl ether, alkylbenzene, alkylnaphthalene, an ester oil, a glycol-based synthetic oil, a polyolefin-based synthetic oil, a mineral oil, a hydrocarbon oil, and the like.

Examples of the powder include inorganic powders such as silicic anhydride, talc, mica, kaolin, sericite,

bentonite, isinglass, titanium mica, alum, calcium carbonate, barium carbonate, magnesium carbonate, zinc oxide, titanium oxide, aluminum oxide, and the like, and organic powders such as polymethyl methacrylate, a dimethylpolysiloxane polymer, a nylon resin, a polystyrene resin, a polyethylene resin, and the like. These powders may be used alone, or two or more thereof may be used in combination.

An excipient is one that is added to improve handling or formulation of a composition or to make it convenient for dosing. The excipient is not particularly limited, examples of which include, for example, starch or derivatives thereof such as starch, a pregelatinized starch, a partially pregelatinized starch, a starch decomposition product, and the like, crystalline cellulose, sugar alcohol, sorbitol, lactose, beer yeast, low-substituted hydroxypropyl cellulose, hydroxypropyl cellulose, a refined white sugar, a light anhydrous silicic acid, calcium silicate, titanium oxide, a precipitated calcium carbonate, and the like. They may be used alone, or two or more thereof may be used in combination.

A content of the base in the composition can be used as the remainder of components other than the base in the composition.

<Other components>

The preservative composition and the composition relating to the present embodiment may contain components other than the component A, the component B, the base, and the component C. The other components are not particularly limited, examples of which include, for example, surfactants other than the component C, a pH adjuster, polyhydric alcohol, a cooling agent, a thickener, a sequestering agent, fragrance, colorant, an antioxidant, vitamins, animal and plant extracts, and the like.

Examples of the surfactants other than the component C include a cationic surfactant, an anionic surfactant, and an amphoteric surfactant. Examples of the cationic surfactant include a monoalkyl type quaternary ammonium salt, a dialkyl type quaternary ammonium salt, a trialkyl type quaternary ammonium salt, a monoalkyl ether type quaternary ammonium salt, other quaternary ammonium salts, alkylamine, fatty acid amidoamine, and the like. Examples of the anionic surfactant include a lauric acid acyl methyl taurine salt, a polyoxyethylene acetate ether salt, an alkyl acyl glutamic acid salt, an alkyl acyl glycine salt, an alkyl phosphoric acid salt, and the like. Examples of the amphoteric surfactant include: glycine type amphoteric surfactants such as an alkyl glycine salt, a carboxymethyl glycine salt, a N-acylaminoethyl-N-2-hydroxyethyl glycine salt, and the like; aminopropionic acid type amphoteric surfactants such as an alkyl aminopropionate salt, an alkyl imino dipropionate salt, and the like; aminoacetic acid betaine type amphoteric surfactants such as an alkyl dimethyl aminoacetic acid betaine, a fatty acid amidopropyl dimethyl aminoacetic acid betaine, and the like; sulfobetaine type amphoteric surfactants such as an alkyl hydroxy sulfobetaine and the like; and the like.

The pH adjuster is not particularly limited, examples of which include, for example, citric acid, sodium citrate, tartaric acid, and the like. The polyhydric alcohol is not particularly limited, examples of which include, for example, glycerin, diglycerin, polyethylene glycols such as dipropylene glycol (DPG) and the like, and the like.

The cooling agent is not particularly limited, examples of which include, for example, I-menthol, a menthyl glyceryl ether, menthyl lactate, a peppermint oil, camphor, icilin, and the like. The antioxidant is not particularly limited, examples of which include, for example, tocopherol and a derivative thereof, ascorbic acid and a derivative thereof, and the like.

The thickener is not particularly limited, examples of which include hydroxymethylcellulose, hydroxypropylmethylcellulose, xanthan gum, and the like.

The sequestering agent (chelating agent) is not particularly limited, examples of which include, for example, edetic acid (EDTA), potassium edetate, phosphoric acid, gluconic acid, succinic acid, ethylenediaminetetraacetic acid, trisodium ethylenediaminehydroxyethyltriacetate, sodium hexametaphosphate, 1-hydroxyethane, 1-diphosphonic acid, tetrasodium 1-hydroxyethane-1,1-diphosphonic acid, and the like.

The composition comprising the preservative composition relating to the present embodiment can be formulated using commonly known producing methods. For example, examples of the method include a method of mixing each of the above-described components and stirring the mixture using a known stirring device such as a disperser mixer, a paddle mixer, and the like, etc.

The preservative composition and the composition containing the preservative composition relating to the present embodiment may be, for example, any of cosmetics, quasi-drugs, foods, medicines, and miscellaneous goods. Examples of cosmetics, quasi-drugs, and medicines include skin cosmetics, sheet cosmetics impregnated with skin cosmetics, and the like.

EXAMPLES

The present invention will be described below in more detail based on Examples, though the present invention is not limited to these Examples. Besides, unless otherwise specified, a compounding amount refers to a compounding amount of active ingredients and is expressed as "% by mass".

<Testing on synergistic preservative effect of 1,2-decanediol and other components by minimum inhibitory concentration (MIC) measurement>

(Preparation of fungus liquid)

Aspergillus brasiliensis (Aspergillus brasiliensis, NBRC 9455) was used as a test fungus. The test fungus was cultured with a potato dextrose agar slant medium at 25°C for 7 to 14 days, and physiological saline added with 2% Tween 80 was dropped onto the surface of the medium slant to scrape off fungal spores with a platinum loop. The liquid containing the fungal spores was filtered through sterile gauze folded in four and diluted with physiological saline added with 2% Tween 80 to $10^6$ CFU/mL to prepare a test fungus liquid.

(Preparation of dilution series of preservative components)

Using, as dilution solvents, dimethyl sulfoxide (DMSO) for 1,2-decanediol and ethylhexylglycerin, and purified water for caprylpolyglyceryl, sodium polyphosphate, 1,2-heptanediol, and 1,2-octanediol, each component was diluted from a mother liquor filled up in a measuring flask to prepare dilution series.

(Preparation of agar medium added with preservative component)

Agar medium was dispensed in a volume of 9.8 mL each into a test tube, sterilized in an autoclave, and then kept warm in a thermobath at about 60°C, to which 0.1 mL of each diluted solution of 1,2-decanediol and 0.1 mL of each diluted solution of each preservative component were added, and which was mixed well with a vortex mixer and flowed into a petri dish having a diameter of 90 mm to be solidified.

(MIC measurement)

The fungus liquid was taken with a disposable loop having a diameter of 1 mm and streaked to a length of about 1 cm on each agar medium added with a preservative component. It was cultured at 25°C, and presence or absence of bacterial growth after 3 and 5 days were determined. The results are as shown in Tables 1 to 5. Presence of bacterial growth was marked as +, and absence of bacterial growth was marked as -. The minimum concentration at which bacterial growth was inhibited was taken as a MIC value.

Table 1

| | | Concentration of 1,2-decanediol (ppm) | | | | |
|---|---|---|---|---|---|---|
| | | 0 | 38 | 75 | 150 | 300 |
| Concentration of 1,2-heptanediol (ppm) | 0 | + | + | + | + | - |
| | 375 | + | + | + | - | - |
| | 750 | + | + | + | - | - |
| | 1500 | + | + | + | - | - |
| | 3000 | - | - | - | - | - |

A MIC value of 1,2-decanediol against the test fungus was 300 ppm, and a MIC value of 1,2-heptanediol against the test fungus was 3000 ppm. When a concentration of 1,2-decanediol was 150 ppm (0.5 times the MIC value), growth of the test fungus was observed, but when 1,2-heptanediol was further contained at 375 ppm (less than 0.5 times the MIC value), the growth of the test fungus was inhibited. From this, it can be found out that the combination of 1,2-decanediol and 1,2-heptanediol has a synergistic effect on inhibiting growth of the test fungus.

Table 2

| | | Concentration of 1,2-decanediol (ppm) | | | | |
|---|---|---|---|---|---|---|
| | | 0 | 38 | 75 | 150 | 300 |
| Concentration of 1,2-octanediol (ppm) | 0 | + | + | + | + | - |
| | 188 | + | + | + | - | - |
| | 375 | + | + | + | - | - |
| | 750 | + | + | - | - | - |
| | 1500 | - | - | - | - | - |

A MIC value of 1,2-octanediol against the test fungus was 1500 ppm. When a concentration of 1,2-decanediol was 150 ppm (0.5 times the MIC value), growth of the test fungus was observed, but when 1,2-octanediol was further contained at 188 ppm (less than 0.5 times the MIC value), the growth of the test fungus was inhibited. Moreover, when a concentration of 1,2-octanediol was 750 ppm (0.5 times the MIC value), growth of the test fungus was observed, but when 1,2-decanediol was further contained at 75 ppm (less than 0.5 times the MIC value), the growth of the test fungus was inhibited. From this, it can be found out that the combination of 1,2-decanediol and 1,2-octanediol has a synergistic effect on inhibiting growth of the test fungus.

Table 3

| | | Concentration of 1,2-decanediol (ppm) | | | | |
|---|---|---|---|---|---|---|
| | | 0 | 38 | 75 | 150 | 300 |
| Concentration of sodium tripolyphosphate (ppm) | 0 | + | + | + | + | - |
| | 625 | + | + | + | + | - |
| | 1250 | + | + | + | - | - |
| | 2500 | + | - | - | - | - |
| | 5000 | - | - | - | - | - |

A MIC value of sodium tripolyphosphate against the test fungus was 5000 ppm. When a concentration of 1,2-decanediol was 150 ppm (0.5 times the MIC value), growth of the test fungus was observed, but when sodium tripolyphosphate was further contained at 1250 ppm (less than 0.5 times the MIC value), the growth of the test fungus was inhibited. Moreover, when a concentration of sodium polyphosphate was 2500 ppm (0.5 times the MIC value), growth of the test fungus was observed, but when 1,2-decanediol was further contained at 38 ppm (less than 0.5 times the MIC value), the growth of the test fungus was inhibited. From this, it can be found out that the combination of 1,2-decanediol and sodium polyphosphate has a synergistic effect on inhibiting growth of the test fungus.

Table 4

| | | Concentration of 1,2-decanediol (ppm) | | | | |
|---|---|---|---|---|---|---|
| | | 0 | 38 | 75 | 150 | 300 |
| Concentration of ethylhexylglycerin (ppm) | 0 | + | + | + | + | - |
| | 188 | + | + | + | - | - |
| | 375 | + | + | + | - | - |
| | 750 | + | + | - | - | - |
| | 1500 | - | - | - | - | - |

A MIC value of ethylhexylglycerin against the test fungus was 1500 ppm. When a concentration of 1,2-decanediol was 150 ppm, growth of the test fungus was observed, but when ethylhexylglycerin was further contained at 188 ppm, the growth of the test fungus was inhibited. Moreover, when a concentration of ethylhexylglycerin was 750 ppm (0.5 times the MIC value), growth of the test fungus was observed, but when 1,2-decanediol was further contained at 75 ppm (less than

0.5 times the MIC value), the growth of the test fungus was inhibited. From this, it can be found out that the combination of 1,2-decanediol and ethylhexylglycerin has a synergistic effect on inhibiting growth of the test fungus.

Table 5

| | | Concentration of 1,2-decanediol (ppm) | | | | |
|---|---|---|---|---|---|---|
| | | 0 | 38 | 75 | 150 | 300 |
| Concentration of wintergreen leaf extract (ppm) | 0 | + | + | + | + | - |
| | 125 | + | + | + | + | - |
| | 250 | + | + | + | + | - |
| | 500 | + | + | + | - | - |
| | 1000 | - | - | - | - | - |

From Table 5, it can be found out that a combination of a wintergreen leaf extract with 1,2-decanediol has no synergistic effect on inhibiting growth of the test fungus.

<Preservative effectiveness test against bacteria>

(Preparation of bacterial liquid)

Escherichia coli (Escherichia coli NBRC 3972) and Staphylococcus aureus (Staphylococcus aureus NBRC 13276) were used as test fungi. Each test bacteria was precultured with SCDLP medium at 35°C for 20 hours. Preculture solutions of Escherichia coli and Staphylococcus aureus were mixed in equal amounts and transferred to a sterilized container to prepare a test bacterial liquid.

(Preservative effectiveness test)

Each of the components shown in Table 6 was mixed in accordance with a conventional method to prepare each of compositions in Examples and Comparative examples. Besides, as a nonionic surfactant, BLAUNON RCW-60 (polyoxyethylene hydrogenated castor oil) was used. A 0.2 mL of test bacterial liquid was inoculated into 20 g of each composition, mixed thoroughly using a vortex mixer, and then stored at 35°C. Then, the number of viable bacteria after 7 days was measured, and an antibacterial activity value was calculated using the following equation. The results show that the larger the numerical value is, the higher the antibacterial activity is. An antibacterial activity value of 2.0 or more was regarded as a passing mark.

Antibacterial activity value = logarithmic value of the initial number of viable fungi after inoculation - logarithmic value of the number of viable bacteria after the elapsed number of days

Table 6

| | | Example | | Comparative example | | | Control example |
|---|---|---|---|---|---|---|---|
| | | 1 | 2 | 1 | 2 | 3 | 1 |
| Compounding amount (% by mass) | | | | | | | |
| (A) | 1,2-decanediol | 0.05 | 0.05 | 0.05 | - | - | - |
| (B) | 1,2-heptanediol | 0.50 | - | - | 0.50 | - | - |
| | 1,2-octanediol | - | 0.15 | - | - | 0.15 | - |
| 1,2-pentanediol | | - | - | - | - | - | - |
| (C) | Nonionic surfactant | 0.50 | 0.50 | 0.50 | 0.50 | 0.50 | 0.50 |
| Water | | remainder | remainder | remainder | remainder | remainder | remainder |
| Activity value | | | | | | | |

(continued)

| | Example | | Comparative example | | | Control example |
|---|---|---|---|---|---|---|
| | 1 | 2 | 1 | 2 | 3 | 1 |
| *E.coli+S.aureus* (after 7 days) | 5.6 | 2.4 | -0.5 | 1.1 | 0.7 | -1.4 |

The results in Table 6 show that the composition relating to the present embodiment has excellent preservative property and safety against bacteria.

<Preservative effectiveness test 1 against fungi>

(Preparation of fungus liquid)

Aspergillus brasiliensis (Aspergillus brasiliensis NBRC 9455) and Candida albicans (Candida albicans NBRC 1594) were used as test fungi. For Aspergillus brasiliensis, the test fungus was precultured with a potato dextrose agar medium at 25°C for 10 to 25 days, and fungal spores were collected from the surface of the medium with a sterile cotton swab and suspended in physiological saline added with 2% Tween 80. The liquid containing the fungal spores of Aspergillus brasiliensis was filtered through sterile gauze folded in four and diluted with physiological saline added with 2% Tween 80 to $10^6$ CFU/mL to prepare a test fungus liquid. For Candida albicans, the test fungus was precultured with GPLP medium at 25°C for 20 hours and transferred to a sterilized container to prepare a test fungus liquid.

(Preservative effectiveness test)

Each of the components shown in Table 7 was mixed in accordance with a conventional method to prepare each of compositions in Examples and Comparative examples. Besides, as a nonionic surfactant, BLAUNON RCW-60 (polyoxyethylene hydrogenated castor oil) was used. A 0.2 mL of test fungus liquid was inoculated into 20 g of each composition, mixed thoroughly using a vortex mixer, and then stored at 25°C. Then, the number of viable fungi was measured after 1 day for Candida albicans and after 7 days for Aspergillus brasiliensis, and an antibacterial activity value was calculated as described below. Antibacterial activity values of 1.0 or more and 2.0 or more were regarded as passing marks for Aspergillus brasiliensis and Candida albicans, respectively.

Antibacterial activity value = logarithmic value of the initial number of viable fungi after inoculation - logarithmic value of the number of viable fungi after the elapsed number of days

Table 7

| | | Example | | Comparative example | | | |
|---|---|---|---|---|---|---|---|
| | | 3 | 4 | 4 | 5 | 6 | 7 |
| Compounding amount (% by mass) | | | | | | | |
| (A) | 1,2-decanediol | 0.05 | 0.05 | 0.05 | - | - | - |
| (B) | 1,2-heptanediol | 0.50 | - | - | 0.50 | - | - |
| | 1,2-octanediol | - | 0.15 | - | - | 0.15 | - |
| (C) | Nonionic surfactant | 0.50 | 0.50 | 0.50 | 0.50 | 0.50 | 0.50 |
| | 1,2-pentanediol | - | - | - | - | - | 2.50 |
| | Methylparaben | - | - | - | - | - | - |
| | Phenoxyethanol | - | - | - | - | - | - |
| | Water | remainder | remainder | remainder | remainder | remainder | remainder |
| Activity value | | | | | | | |

(continued)

| | Example | | Comparative example | | | |
|---|---|---|---|---|---|---|
| | 3 | 4 | 4 | 5 | 6 | 7 |
| *A.brasiliensis* (after 7 days) | 1.46 | 1.03 | 0.62 | 0.52 | 0.34 | 0.30 |
| *C.albicans* (after 1 day) | 2.44 | 2.66 | 0.21 | 0.00 | -0.34 | -0.34 |

| | | Comparative example | | | | Reference example | Control example |
|---|---|---|---|---|---|---|---|
| | | 8 | 9 | 10 | 11 | 1 | 2 |
| Compounding amount (% by mass) | | | | | | | |
| (A) | 1,2-decanediol | 0.05 | - | - | - | - | - |
| (B) | 1,2-heptanediol | - | 0.50 | 0.50 | - | - | - |
| | 1,2-octanediol | - | 0.15 | - | 0.15 | - | - |
| (C) | Nonionic surfactant | 0.50 | 0.50 | 0.50 | 0.50 | 0.50 | 0.50 |
| 1,2-pentanediol | | 2.50 | - | 2.50 | 2.50 | | |
| Methylparaben | | - | - | - | - | 0.10 | - |
| Phenoxyethanol | | - | - | - | - | 0.30 | - |
| Water | | remainder | remainder | remainder | remainder | remainder | remainder |
| Activity value | | | | | | | |
| *A.brasiliensis* (after 7 days) | | 0.59 | 0.71 | 0.75 | 0.94 | 1.25 | 0.79 |
| *C.albicans* (after 1 day) | | 1.40 | 1.67 | 0.26 | 0.47 | -0.15 | -1.62 |

The results in Table 7 show that the composition relating to the present embodiment has excellent preservative property against fungi and safety.

<Preservative effectiveness test 2 against fungi>

Aspergillus brasiliensis (Aspergillus brasiliensis NBRC 9455) and yeast (Candida albicans NBRC 1594) were used as test fungi. For Aspergillus brasiliensis, the test fungus was precultured with a potato dextrose agar medium at 25°C for 10 to 25 days, and fungal spores were collected from the surface of the medium with a sterile cotton swab and suspended in physiological saline added with 2% Tween 80. The liquid containing the fungal spores of Aspergillus brasiliensis was filtered through sterile gauze folded in four and diluted with physiological saline added with 2% Tween 80 to $10^6$ CFU/mL to prepare a test fungus liquid. For yeast, the test fungus was precultured with GPLP agar medium at 25°C for 20 hours and transferred to a sterilized container to prepare a test fungus liquid. Each of the components shown in Tables 8 and 9 was mixed in accordance with a conventional method to prepare each of compositions in Examples and Comparative examples. Besides, as a nonionic surfactant, BLAUNON RCW-60 (polyoxyethylene hydrogenated castor oil) was used. A preservative effectiveness test was performed in accordance with the preservative effectiveness test method in The Japanese Pharmacopoeia, 18th Edition.

Table 8

| | | | Example | |
|---|---|---|---|---|
| | | | 5 | 6 |
| Compounding amount (% by mass) | (A) | 1,2-decanediol | 0.05 | 0.075 |
| | (B) | 1,2-heptanediol | 0.50 | 0.10 |
| | (C) | Nonionic surfactant | 0.50 | 0.50 |
| | Water | | remainder | remainder |
| Activity value | *A.brasiliensis* (after 14 days) | | 2.23 | 1.82 |
| | *A.brasiliensis* (after 21 days) | | 3.03 | 2.43 |

Table 9

| | | | Example | | |
|---|---|---|---|---|---|
| | | | 7 | 8 | 9 |
| Compounding amount (% by mass) | (A) | 1,2-decanediol | 0.05 | 0.01 | 0.075 |
| | (B) | 1,2-heptanediol | 0.50 | 0.50 | 0.10 |
| | (C) | Nonionic surfactant | 0.50 | 0.50 | 0.50 |
| | Water | | remainder | remainder | remainder |
| Activity value | *C.albicans* (after 7 days) | | 4.11 | 2.38 | 2.36 |
| | *C.albicans* (after 14 days) | | 4.11 | 2.50 | 4.11 |

It can be found out that the results in Tables 8 and 9 show that the composition relating to the present embodiment has excellent preservative property against fungi and safety.

(Skin lotion formulation)

Each of the components shown in Table 10 was mixed in accordance with a conventional method to prepare a skin lotion. Besides, as a nonionic surfactant, BLAUNON RCW-60 (polyoxyethylene hydrogenated castor oil) was used. A preservative effectiveness test was performed in accordance with the preservative effectiveness test method in The Japanese Pharmacopoeia, 18th Edition.

Table 10

| | | Example | | | Reference example | Control example |
|---|---|---|---|---|---|---|
| | | 10 | 11 | 12 | 2 | 3 |
| Compounding amount (% by mass) | | | | | | |
| (A) | 1,2-decanediol | 0.05 | 0.05 | 0.05 | - | - |
| (B) | 1,2-heptanediol | 0.25 | 0.50 | - | - | - |
| | 1,2-octanediol | - | - | 0.15 | - | - |
| (C) | Nonionic surfactant | 0.50 | 0.50 | 0.50 | 0.50 | 0.50 |
| Methylparaben | | - | - | - | 0.1 | - |
| Phenoxyethanol | | - | - | - | 0.3 | - |
| EDTA | | 0.05 | 0.05 | 0.05 | 0.05 | 0.05 |
| DPG | | 6.0 | 6.0 | 6.0 | 6.0 | 6.0 |
| Xanthan gum | | 0.01 | 0.01 | 0.01 | 0.01 | 0.01 |
| Sorbitol | | 1.0 | 1.0 | 1.0 | 1.0 | 1.0 |

(continued)

| | | Example | | | Reference example | Control example |
|---|---|---|---|---|---|---|
| | | 10 | 11 | 12 | 2 | 3 |
| Betaine | | 4.0 | 4.0 | 4.0 | 4.0 | 4.0 |
| Citric acid | | 0.02 | 0.02 | 0.02 | 0.02 | 0.02 |
| Citric acid Na | | 0.10 | 0.10 | 0.10 | 0.10 | 0.10 |
| Water | | remainder | remainder | remainder | remainder | remainder |
| Activity value | *A.brasiliensis* (after 7 days) | 3.15 | 3.20 | 3.20 | 3.04 | 0.53 |
| | *C.albicans* (after 1 day) | 4.00 | 4.00 | 4.00 | 1.30 | -0.36 |

It can be found out that the results in Table 10 show that the skin lotion containing the preservative composition relating to the present embodiment has excellent preservative property against fungi and safety.

(Sheet mask formulation)

Each of the components shown in Table 11 was mixed in accordance with a conventional method, and a nonwoven sheet was impregnated with each of cosmetics in a sufficient amount to prepare a sheet mask. Besides, as a nonionic surfactant, BLAUNON RCW-60 (polyoxyethylene hydrogenated castor oil) was used. A preservative effectiveness test was performed in accordance with the preservative effectiveness test method in The Japanese Pharmacopoeia, 18th Edition.

Table 11

| | | | Example | | Reference example | Control example |
|---|---|---|---|---|---|---|
| | | | 13 | 14 | 3 | 4 |
| Compounding amount (% by mass) | (A) | 1,2-decanediol | 0.05 | 0.05 | - | - |
| | (B) | 1,2-heptanediol | 0.50 | - | - | - |
| | | 1,2-octanediol | - | 0.15 | - | - |
| | (C) | Nonionic surfactant | 0.50 | 0.50 | 0.50 | 0.50 |
| | Methylparaben | | - | - | 0.10 | - |
| | Phenoxyethanol | | - | - | 0.30 | - |
| | EDTA | | 0.05 | 0.05 | 0.05 | 0.05 |
| | DPG | | 6.0 | 6.0 | 6.0 | 6.0 |
| | Xanthan gum | | 0.01 | 0.01 | 0.01 | 0.01 |
| | Sorbitol | | 1.0 | 1.0 | 1.0 | 1.0 |
| | Betaine | | 4.0 | 4.0 | 4.0 | 4.0 |
| | Citric acid | | 0.02 | 0.02 | 0.02 | 0.02 |
| | Citric acid Na | | 0.10 | 0.10 | 0.10 | 0.10 |
| | Water | | remainder | remainder | remainder | remainder |
| Activity value | *A.brasiliensis* (after 14 days) | | 2.30 | 2.32 | 1.96 | 1.22 |
| | *C.albicans* (after 1 day) | | 3.40 | 3.52 | 0.96 | -1.11 |

It can be found out that the results in Table 11 show that the sheet mask impregnated with the skin lotion

containing the preservative composition relating to the present embodiment has excellent preservative property against fungi and safety.

INDUSTRIAL APPLICABILITY

The preservative composition and the composition containing the preservative composition relating to the present invention are excellent in preservative property and safety and can be added as appropriate to items required to be imparted with a preservative property, such as cosmetics, medicines, quasi-drugs, foods, and the like.

## Claims

**1.** A preservative composition comprising the following component A and the following component B:

Component A: 1,2-decanediol
Component B: At least one or more selected from the group consisting of 1,2-alkanediol having 7 to 9 carbon atoms, sodium polyphosphate, and ethylhexylglycerin.

**2.** The preservative composition of claim 1, wherein the component B is 1,2-heptanediol.

**3.** The preservative composition of claim 1 or 2, further comprising the following component C:
Component C: nonionic surfactant.

**4.** A composition comprising the following component A, the following component B, and a base,
wherein a content of the component A is 0.005 to 0.5% by mass and a content of the component B is 0.025 to 5.0% by mass:

Component A: 1,2-decanediol
Component B: one or more selected from the group consisting of 1,2-alkanediol having 7 to 9 carbon atoms, sodium polyphosphate, and ethylhexylglycerin.

**5.** The composition of claim 4, wherein the component B is 1,2-heptanediol.

**6.** The composition of claim 4 or 5, further comprising the following component C:
Component C: nonionic surfactant.

## INTERNATIONAL SEARCH REPORT

International application No.
**PCT/JP2023/010922**

**A. CLASSIFICATION OF SUBJECT MATTER**

***A01N 31/02***(2006.01)i; ***A01P 3/00***(2006.01)i
FI: A01N31/02; A01P3/00

According to International Patent Classification (IPC) or to both national classification and IPC

**B. FIELDS SEARCHED**

Minimum documentation searched (classification system followed by classification symbols)

A01N31/02; A01P3/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 2017-178787 A (MANDOM CORPORATION) 05 October 2017 (2017-10-05) claims, paragraphs [0025], [0072] | 1, 3-4, 6 |
| Y | claims, paragraphs [0025], [0072] | 2, 5 |
| X | JP 2005-526036 A (SYMRISE GMBH & CO. KG) 02 September 2005 (2005-09-02) claims, paragraphs [0066]-[0069], [0117] | 1, 3-4, 6 |
| Y | claims, paragraphs [0066]-[0069], [0117] | 2, 5 |
| Y | JP 2020-002032 A (ADEKA CORPORATION) 09 January 2020 (2020-01-09) claims, paragraphs [0001]-[0011] | 2, 5 |

☐ Further documents are listed in the continuation of Box C.  ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 April 2023** | **16 May 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2023/010922**

| Patent document cited in search report | Publication date (day/month/year) | Patent family member(s) | Publication date (day/month/year) |
|---|---|---|---|
| JP 2017-178787 A | 05 October 2017 | (Family: none) | |
| JP 2005-526036 A | 02 September 2005 | US 2005/0222276 A1<br>claims, paragraphs [0092]-[0142], [0309] | |
| JP 2020-002032 A | 09 January 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H11322591 A


### Non-patent literature cited in the description


- The Japanese Pharmacopoeia